# EUROPEAN PATENT APPLICATION

(11) **EP 4 683 182 A1**
(43) Date of publication of application: **21.01.2026**
(21) Application number: 24934352.6
(22) Date of filing: 30.12.2024
(51) Int. Cl.: H02K 7/06, H02K 7/116, H02K 7/10

(54) **ELECTRIC CYLINDER HAVING CENTRAL MOTOR**

(30) Priority: 31.05.2024 CN 202410700179
(71) Applicant: LINGONG HEAVY MACHINERY CO., LTD, Jinan City, Shandong 250104 (CN)
(72) Inventor: SUN, Guangpeng, Jinan, Shandong 250104 (CN); ZHANG, Zhaoliang, Jinan, Shandong 250104 (CN); WANG, Dehong, Jinan, Shandong 250104 (CN); GUO, Bing, Jinan, Shandong 250104 (CN); XIE, Bin, Jinan, Shandong 250104 (CN)
(74) Representative: Rapisardi, Mariacristina
(86) International application number: PCT/CN2024/143827
(87) International publication number: WO 2025/246353

(57) **Abstract**

Provided is an electric cylinder with a center-mounted motor. The electric cylinder with the center-mounted motor includes a cylinder body (1), a cylinder rod (2) and a drive assembly. The cylinder body (1) is provided with a sliding hole (11), and the cylinder rod (2) is slidably telescoped within the sliding hole (11). The drive assembly includes a drive sleeve (3) and a motor (4), a hole opening of the sliding hole (11) is fixedly provided with a fixing member (12), the drive sleeve (3) is rotationally connected to the fixing member (12), the drive sleeve (3) is sleeved on the cylinder rod (2) and is threadedly connected to the cylinder rod (2), and the motor (4) is disposed on the fixing member (12) and is capable of driving the drive sleeve (3) to rotate.

## Description

The present application claims priority to Chinese Patent Application No. 202410700179.5, filed with the China National Intellectual Property Administration (CNIPA) on May 31, 2024, the disclosure of which is incorporated herein by reference in its entirety.

### TECHNICAL FIELD

The present application relates to the technical field of telescopic cylinders, for example, an electric cylinder with a center-mounted motor.

### BACKGROUND

An electric cylinder is a modular product that integrates a motor and a lead screw nut structure into one. The electric cylinder converts the rotary motion of the output shaft of the motor into the linear telescopic motion of a cylinder rod and is widely applied to various fields.

The motor is generally disposed at the end of the whole electric cylinder structure. For example, in the patent document with publication number CN104253505A, in the electric cylinder structure, the servo motor drives a lead screw to rotate through a transmission device, and the extension and retraction of the telescopic tube relative to the cylinder body can be implemented under the cooperation of the lead screw nut structure. However, in the above-described structure, since the servo motor and the transmission device are disposed at the end of the cylinder body facing away from the cylinder rod, and the servo motor is generally large in size, it will greatly occupy the space at the end of the cylinder body. Since each connection end of two adjacent fork frames of the scissor arm structure is mounted with a support tube, to ensure the intensity of the scissor arm, when the electric cylinder is mounted on the scissor arm structure, the motor interferes with the support tube at the mounting position where the support tube is mounted between two fork frames at the end of the scissor arm, as a result, the support tube cannot be mounted in some positions. If the electric cylinder is considered to be dislocated to avoid the mounting position of the support tube, structures such as a bracket are required to be mounted on the scissor arm, so that the structure of the scissor arm is complicated, and the practicability is poor.

### SUMMARY

The present application provides an electric cylinder with a center-mounted motor, when a cylinder rod extends relative to the cylinder body, the motor is located in the middle of the electric cylinder, thereby effectively reserving space at two ends of the electric cylinder, avoiding the motor from interfering with the space at the ends of the cylinder body, optimizing the position of the motor, and enabling the electric cylinder to be more adapted to the assembly of the scissor arm.

The present application provides an electric cylinder with a center-mounted motor. The electric cylinder with the center-mounted motor includes a cylinder body, a cylinder rod and a drive assembly. The cylinder body is provided with a sliding hole, and the cylinder rod is telescopically slidable within the sliding hole. The drive assembly includes a drive sleeve and a motor, a hole opening of the sliding hole is fixedly provided with a fixing member, the drive sleeve is rotationally connected to the fixing member, the drive sleeve is sleeved on the cylinder rod and is threadedly connected to the cylinder rod, and the motor is disposed on the fixing member and is capable of driving the drive sleeve to rotate.

In one or more embodiments, the fixing member is provided with a transmission assembly, the motor and the drive sleeve are connected to the transmission assembly, and the motor drives the drive sleeve to rotate through the transmission assembly.

In one or more embodiments, the fixing member is provided with a mounting cavity, the transmission assembly and the drive sleeve are disposed within the mounting cavity, an output shaft of the motor extends into the mounting cavity, and the cylinder rod is disposed to penetrate through the mounting cavity.

In one or more embodiments, the transmission assembly includes a driving gear and a driven gear, the driving gear and the driven gear are rotationally connected to the fixing member, the driving gear is fixedly sleeved on an output shaft of the motor, the driving gear is in meshing engagement with the driven gear, meshing teeth are provided at an outer periphery of the drive sleeve, and the drive sleeve is in meshing engagement with the driven gear through the meshing teeth.

In one or more embodiments, the transmission assembly includes a driving pulley, a driven pulley and a transmission belt. The driving pulley and the driven pulley are fixedly sleeved on an output shaft of the motor and the drive sleeve, respectively, and the transmission belt is sleeved on and in meshing engagement with the driving pulley and the driven pulley.

In one or more embodiments, the electric cylinder further includes a reducer fixed on the fixing member, the motor is disposed on the reducer, an output shaft of the motor is connected to a first end of the reducer, and a second end of the reducer is connected to the transmission assembly.

In one or more embodiments, an end of the cylinder body facing away from the cylinder rod is provided with a first hinged shaft hole, and an end of the cylinder rod facing away from the cylinder body is provided with a second hinged shaft hole.

In one or more embodiments, the sliding hole is provided as a stepped hole, a limit end surface is formed between a large end of the stepped hole and a small end of the stepped hole, the cylinder rod is provided as a stepped rod, and an abutment end surface is formed between a large end of the stepped rod and a small end of the stepped rod. The large end of the stepped hole is slidably connected to the large end of the stepped rod, and the small end of the stepped hole is slidably connected to the small end of the stepped rod. The abutment end surface is disposed to abut against the limit end surface when the cylinder rod extends outwardly to a limit position relative to the cylinder body.

In one or more embodiments, each of the cylinder body, the cylinder rod, the fixing member and the motor is coated with a rust-proof layer.

In one or more embodiments, a support member is fixedly connected between the motor and the cylinder body.

### BRIEF DESCRIPTION OF DRAWINGS

FIG. 1 is a schematic structural diagram of an electric cylinder provided in the present application;
FIG. 2 is a simplified structural diagram of an electric cylinder provided in the present application;
FIG. 3 is a simplified structural diagram of the part of a transmission assembly provided in an embodiment of the present application;
FIG. 4 is a simplified structural diagram of the part of a transmission assembly provided in another embodiment of the present application; and
FIG. 5 is an exploded schematic diagram of the part of a cylinder body and a cylinder rod provided in the present application.

### List of reference numbers

- 1: cylinder body
- 101: first hinged shaft hole
- 11: sliding hole
- 111: limit end surface
- 12: fixing member
- 121: mounting cavity
- 13: transmission assembly
- 131: driving gear
- 132: driven gear
- 133: driving pulley
- 134: driven pulley
- 135: transmission belt
- 14: support member
- 2: cylinder rod
- 201: second hinged shaft hole
- 21: abutment end surface
- 3: drive sleeve
- 31: meshing teeth
- 4: motor
- 5: reducer

### DETAILED DESCRIPTION

The present application is described below in conjunction with drawings and embodiments. The embodiments described herein are intended to explain the present application and not to limit the present application. For ease of description, only part, not all, of the structures related to the present application are illustrated in the drawings.

In the description of the present application, unless otherwise expressly specified and limited, the term "connected to each other", "connected", or "fixed" is to be construed in a broad sense, for example, as fixedly connected, detachably connected, or integrated; mechanically connected or electrically connected; directly connected to each other, indirectly connected to each other via an intermediary, internally connected between two elements, or an interaction relation between two elements. Meanings of the preceding terms in the present application may be understood based on practical situations.

In the present application, unless otherwise expressly specified and limited, when a first feature is described as "above" or "below" a second feature, the first feature and the second feature may be in direct contact or be in contact via another feature between the two features. Moreover, when the first feature is described as "on", "above", or "over" the second feature, the first feature is right on, above, or over the second feature or the first feature is obliquely on, above, or over the second feature, or the first feature is simply at a higher level than the second feature. When the first feature is described as "under", "below", or "underneath" the second feature, the first feature is right under, below, or underneath the second feature or the first feature is obliquely under, below, or underneath the second feature, or the first feature is simply at a lower level than the second feature.

In the description of this embodiment, the orientation or position relationships indicated by terms "above", "below", "right", and the like are based on the orientation or position relationships shown in the drawings, merely for ease of description and simplifying an operation, these relationships do not indicate or imply that the referred device or element has a specific orientation and is constructed and operated in a specific orientation, and thus it is not to be construed as limiting the present application. In addition, the terms "first" and "second" are used only to distinguish between descriptions and have no special meaning.

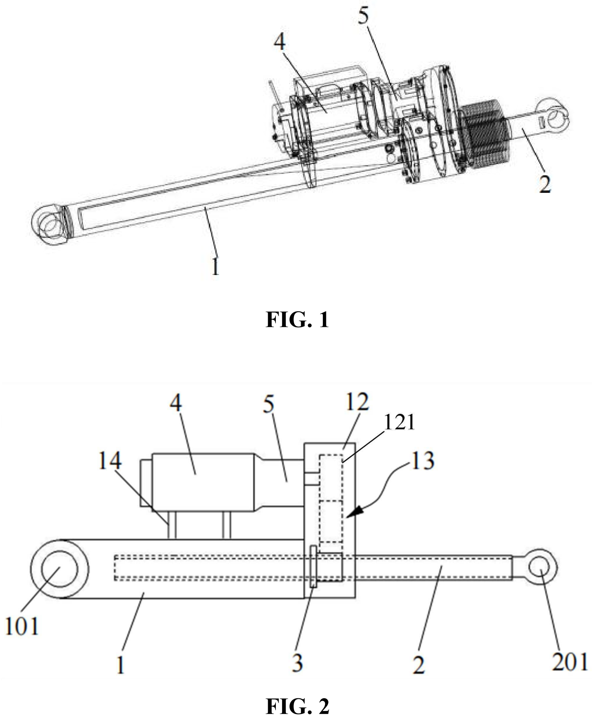

This embodiment provides an electric cylinder with a center-mounted motor. Referring to FIGS. 1 to 5, the electric cylinder includes a cylinder body 1, a cylinder rod 2 and a drive assembly. The cylinder body 1 is provided with a sliding hole 11, and the cylinder rod 2 is slidably telescoped within the sliding hole 11. The drive assembly includes a drive sleeve 3 and a motor 4. A hole opening of the sliding hole 11 is fixedly provided with a fixing member 12, the drive sleeve 3 is rotationally connected to the fixing member 12, the drive sleeve 3 is sleeved on the cylinder rod 2 and is threadedly connected to the cylinder rod 2, and the motor 4 is disposed on the fixing member 12 and is capable of driving the drive sleeve 3 to rotate.

In this embodiment, the drive sleeve 3 is rotationally connected to the fixing member 12, the drive sleeve 3 is sleeved on the cylinder rod 2 and is threadedly connected to the cylinder rod 2, the drive sleeve 3 and the cylinder rod 2 form a lead screw nut structure, and the motor 4 can drive the drive sleeve 3 to rotate. With the threaded connection between the cylinder rod 2 and the drive sleeve 3 and the cooperation between the cylinder rod 2 and the sliding hole 11, the slidable telescoping of the cylinder rod 2 relative to the sliding hole 11 is achieved. In addition, the fixing member 12 is fixed at the hole opening of the sliding hole 11, and the motor 4 is disposed on the fixing member 12, that is, the motor 4 is fixedly disposed to the hole opening of the sliding hole 11 through the fixing member 12. This embodiment provides the electric cylinder with the center-mounted motor, and the electric cylinder with the center-mounted motor has a simple structure. In the electric cylinder with the center-mounted motor, when the cylinder rod 2 extends relative to the cylinder body 1, the motor 4 is always located at the hole opening of the sliding hole 11, that is, the motor 4 is located in the middle of the electric cylinder. In this way, the space at two ends of the electric cylinder can be effectively reserved, the interference of the motor 4 with the space at the ends of the cylinder body 1 is avoided, and the position of the motor 4 is optimized. In this manner, when the electric cylinder and the scissor arm are mounted, there is no interference with the mounting of the support tube of the fork frame of the scissor arm; therefore, the electric cylinder can be more adapted to the assembly of the scissor arm.

Exemplarily, the drive sleeve 3 is provided with a screw hole, and the drive sleeve 3 is sleeved on the cylinder rod 2 through the screw hole and is threadedly connected to the cylinder rod 2.

In this embodiment, a transmission assembly 13 is disposed on the fixing member 12, the motor 4 and the drive sleeve 3 are connected to the transmission assembly 13 separately, and the motor 4 drives the drive sleeve 3 to rotate through the transmission assembly 13. Exemplarily, an output shaft of the motor 4 rotates to drive the transmission assembly 13 to rotate, whereby the transmission assembly 13 drives the drive sleeve 3 to rotate.

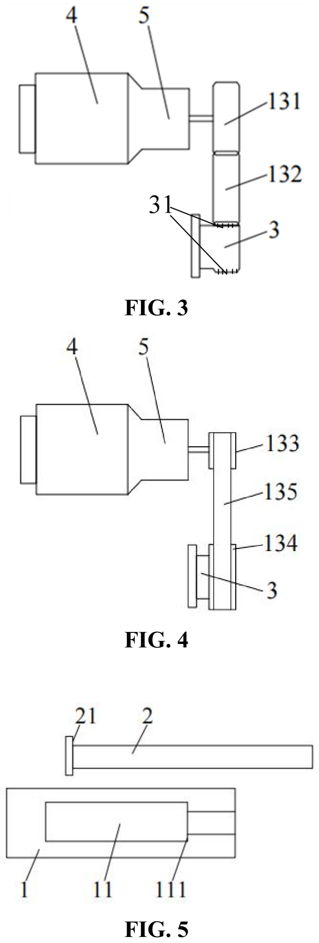

In an optional embodiment, referring to FIG. 3, the transmission assembly 13 includes a driving gear 131 and a driven gear 132. The driving gear 131 and the driven gear 132 are rotationally connected to the fixing member 12, the driving gear 131 is fixedly sleeved on the output shaft of the motor 4, the driving gear 131 is in meshing engagement with the driven gear 132, meshing tooth 31 are provided at an outer periphery of the drive sleeve 3, and the drive sleeve 3 is in meshing engagement with the driven gear 132 through the meshing teeth 31. Exemplarily, the output shaft of the motor 4 rotates to drive the driving gear 131 to rotate, as the driving gear 131 rotates, the driving gear 131 drives the driven gear 132 to rotate, and then the driven gear 132 drives the drive sleeve 3 to rotate. With the threaded cooperation between the drive sleeve 3 and the cylinder rod 2, the cylinder rod 2 is driven to perform the telescoping action relative to the cylinder body 1.

The fixing member 12, the driving gear 131 and the driven gear 132 can be implemented directly by providing a gear box. The gear box includes the driving gear 131 and the driven gear 132, and the fixing member 12 is provided as the housing of the gear box.

In an optional embodiment, referring to FIG. 4, the transmission assembly 13 includes a driving pulley 133, a driven pulley 134 and a transmission belt 135. The driving pulley 133 and the driven pulley 134 are fixedly sleeved on the output shaft of the motor 4 and the drive sleeve 3 respectively, and the transmission belt 135 is sleeved on the driving pulley 133 and the driven pulley 134 and is in meshing engagement with the driving pulley 133 and the driven pulley 134. Exemplarily, the output shaft of the motor 4 rotates to drive the driving pulley 133 to rotate, the driving gear 131 drives the transmission belt 135 to rotate, thereby driving the driven pulley 134 to rotate, and then the driven pulley 134 drives the drive sleeve 3 to rotate. With the threaded cooperation between the drive sleeve 3 and the cylinder rod 2, the cylinder rod 2 is driven to perform the telescoping action relative to the cylinder body 1.

The above-described two structures are merely two optional embodiments of the transmission assembly 13, and the transmission assembly 13 may also be configured in other structures.

In an optional embodiment, referring to FIG. 5, the sliding hole 11 is provided as a stepped hole, a limit end surface 111 is formed between a large end of the stepped hole and a small end of the stepped hole, the cylinder rod 2 is provided as a stepped rod, and an abutment end surface 21 is formed between a large end of the stepped rod and a small end of the stepped rod. The large end of the stepped hole is slidably connected to the large end of the stepped rod, and the small end of the stepped hole is slidably connected to the small end of the stepped rod. The abutment end surface 21 is configured to abut against the limit end surface 111 when the cylinder rod 2 extends outwardly to a limit position relative to the cylinder body 1. Exemplarily, the sliding hole 11 is provided as the stepped hole, and the cylinder rod 2 is provided as the stepped rod, so that the sliding hole 11 can form the limit end surface 111, and the cylinder rod 2 can form the abutment end surface 21. The abutment end surface 21 can abut against the limit end surface 111 when the cylinder rod 2 extends outwardly to the limit position relative to the cylinder body 1, thereby preventing the cylinder rod 2 from disengaging from the cylinder body 1.

In this embodiment, the fixing member 12 is provided with a mounting cavity 121, the transmission assembly 13 and the drive sleeve 3 are disposed within the mounting cavity 121, the output shaft of the motor 4 extends into the mounting cavity 121, and the cylinder rod 2 is disposed to penetrate through the mounting cavity 121. The mounting cavity 121 is provided to better protect important transmission components such as the transmission assembly 13 and the drive sleeve 3.

Exemplarily, the electric cylinder further includes a reducer 5 fixed on the fixing member 12, the motor 4 is disposed on the reducer 5, the output shaft of the motor 4 is connected to a first end of the reducer 5, and a second end of the reducer 5 is connected to the transmission assembly 13. In this embodiment, the reducer 5 is provided to reduce the rotational speed of the motor 4 while increasing the output torque, thereby lowering the inertia of the load and mitigating the impact on the entire transmission system when starting and stopping the motor 4; thus, both the transmission efficiency and the stability of the system are improved.

In this embodiment, an end of the cylinder body 1 facing away from the cylinder rod 2 is provided with a first hinged shaft hole 101, and an end of the cylinder rod 2 facing away from the cylinder body 1 is provided with a second hinged shaft hole 201. The first hinged shaft hole 101 and the second hinged shaft hole 201 are disposed to enable adaptive hinging with an external scissor arm or other structure.

In an optional embodiment, a support member 14 is fixedly connected between the motor 4 and the cylinder body 1. The support member 14 is provided to prevent the motor 4 from being suspended relative to the cylinder body 1 and to further strengthen the support and fixation between the motor 4 and the cylinder body 1.

Optionally, the support member 14 is provided as multiple support rods, and one end of the support rods 14 is fixed on a housing of the motor 4, and the other end of the support rods 14 is fixed on the cylinder body 1.

Optionally, the support member 14 may also be provided as a support clamp block. Two opposite side end surfaces of the support clamp block are provided with a first arc-shaped clamping surface and a second arc-shaped clamping surface, respectively. The first arc-shaped clamping surface is disposed corresponding to the arc-shaped surface of the surface of the housing of the motor 4, and the second arc-shaped clamping surface is disposed corresponding to the arc-shaped surface of the surface of the cylinder body 1. When the support clamp block is supported between the motor 4 and the cylinder body 1, the first arc-shaped clamping surface is pressed against the surface of the housing of the motor 4, and the second arc-shaped clamping surface is pressed against an outer surface of the cylinder body 1, to enable the support and fixation between the motor 4 and the cylinder body 1. Moreover, the support clamp block is provided to facilitate mounting. During mounting, the support clamp block slides axially along the cylinder body 1 and is inserted into the space between the motor 4 and the cylinder body 1, and the first arc-shaped clamping surface slides on the surface of the housing of the motor 4, while the second arc-shaped clamping surface slides on the outer surface of the cylinder body 1, which makes the mounting convenient and easy to operate.

In an optional embodiment, each of the cylinder body 1, the cylinder rod 2, the fixing member 12 and the motor 4 is coated with a rust-proof layer. The rust-proof layer is provided to prevent components such as the cylinder body 1, the cylinder rod 2, the fixing member 12 and the motor 4 from generating rust due to long-term exposure to the external environment.

## Claims

1. An electric cylinder with a center-mounted motor, comprising a cylinder body (1), a cylinder rod (2) and a drive assembly, wherein
the cylinder body (1) is provided with a sliding hole (11), and the cylinder rod (2) is telescopically slidable within the sliding hole (11); and
the drive assembly comprises a drive sleeve (3) and a motor (4), a hole opening of the sliding hole (11) is fixedly provided with a fixing member (12), the drive sleeve (3) is rotationally connected to the fixing member (12), the drive sleeve (3) is sleeved on the cylinder rod (2) and is threadedly connected to the cylinder rod (2), and the motor (4) is disposed on the fixing member (12) and is capable of driving the drive sleeve (3) to rotate.

2. The electric cylinder of claim 1, wherein the fixing member (12) is provided with a transmission assembly (13), the motor (4) and the drive sleeve (3) are connected to the transmission assembly (13) separately, and the motor (4) drives the drive sleeve (3) to rotate through the transmission assembly (13).

3. The electric cylinder of claim 2, wherein the fixing member (12) is provided with a mounting cavity (121), the transmission assembly (13) and the drive sleeve (3) are disposed in the mounting cavity (121), an output shaft of the motor (4) extends into the mounting cavity (121), and the cylinder rod (2) is disposed to penetrate through the mounting cavity (121).

4. The electric cylinder of claim 2, wherein the transmission assembly (13) comprises a driving gear (131) and a driven gear (132), the driving gear (131) and the driven gear (132) are rotationally connected to the fixing member (12), the driving gear (131) is fixedly sleeved on an output shaft of the motor (4), the driving gear (131) is in meshing engagement with the driven gear (132), meshing teeth (31) are provided on an outer periphery of the drive sleeve (3), and the drive sleeve (3) is in meshing engagement with the driven gear (132) through the meshing teeth (31).

5. The electric cylinder of claim 2, wherein the transmission assembly (13) comprises a driving pulley (133), a driven pulley (134), and a transmission belt (135), the driving pulley (133) and the driven pulley (134) are fixedly sleeved on an output shaft of the motor (4) and the drive sleeve (3), respectively, and the transmission belt (135) is sleeved on the driving pulley (133) and the driven pulley (134) and is in meshing engagement with the driving pulley (133) and the driven pulley (134).

6. The electric cylinder of claim 2, further comprising a reducer (5) fixed on the fixing member (12), wherein the motor (4) is disposed on the reducer (5), an output shaft of the motor (4) is connected to a first end of the reducer (5), and a second end of the reducer (5) is connected to the transmission assembly (13).

7. The electric cylinder of claim 1, wherein an end of the cylinder body (1) facing away from the cylinder rod (2) is provided with a first hinged shaft hole (101), and an end of the cylinder rod (2) facing away from the cylinder body (1) is provided with a second hinged shaft hole (201).

8. The electric cylinder of claim 1, wherein the sliding hole (11) is provided as a stepped hole, a limit end surface (111) is formed between a large end of the stepped hole and a small end of the stepped hole, the cylinder rod (2) is provided as a stepped rod, and an abutment end surface (21) is formed between a large end of the stepped rod and a small end of the stepped rod;
the large end of the stepped hole is slidably connected to the large end of the stepped rod, and the small end of the stepped hole is slidably connected to the small end of the stepped rod; and
the abutment end surface (21) is disposed to abut against the limit end surface (111) when the cylinder rod (2) extends outwardly to a limit position relative to the cylinder body (1).

9. The electric cylinder of claim 1, wherein each of the cylinder body (1), the cylinder rod (2), the fixing member (12) and the motor (4) is coated with a rust-proof layer.

10. The electric cylinder of claim 1, wherein a support member (14) is fixedly connected between the motor (4) and the cylinder body (1).
